(19) Europäisches Patentamt
European Patent Office
Office européen des brevets

(11) **EP 4 353 436 A1**

(12) **EUROPEAN PATENT APPLICATION**
published in accordance with Art. 153(4) EPC

(43) Date of publication:
**17.04.2024 Bulletin 2024/16**

(21) Application number: **21945150.7**

(22) Date of filing: **10.06.2021**

(51) International Patent Classification (IPC):
**B29B 7/74** (2006.01)

(52) Cooperative Patent Classification (CPC):
**B29B 7/74**

(86) International application number:
**PCT/JP2021/022162**

(87) International publication number:
**WO 2022/259476 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mitsui Chemicals, Inc.**
**Tokyo 104-0028 (JP)**

(72) Inventor: **ISAKI, Takeharu**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **KNEADING APPARATUS**

(57) Provided is a kneading apparatus which can obtain, from recovered resin, a recycled resin having a specific viscosity while minimizing the addition of impurities. One kneading apparatus has a second kneader for adding a second resin into a first resin that has been kneaded by a first kneader and kneading the mixture. The second kneader varies the amount of the second resin to be added, according to the viscosity of the first resin kneaded by the first kneader. Other kneading apparatus has a second kneader for adding a second resin and a third resin into a first resin that has been kneaded by a first kneader and kneading the mixture. The second kneader varies the proportion of the to-be-added amount of the second resin with respect to the to-be-added amount of the third resin, according to the viscosity of the kneaded material extruded from the second kneader.

FIG. 1

EP 4 353 436 A1

## Description

Technical Field

The present invention relates to a kneading apparatus.

Background Art

Various methods of recovering resin components that are not actually used-such as resin components recovered from waste products (consumer materials) and resin components that do not meet the specifications for products sold (off-grade materials), which are unavoidably produced in a manufacturing process-and processing these resin components for reuse have been investigated (hereinafter, a recovered resin component is also simply referred to as "recovered resin," and a resin component obtained by processing the recovered resin into a form that can be reused is also simply referred to as "recycled resin").

For example, Patent Literature (hereinafter, referred to as PTL) 1 describes a granulator including an extruder for melt-kneading and extruding waste plastic material, and a molding device for granulating the molten plastic extruded by the extruder into pellets.

According to PTL 1, waste plastics to be reused have different melt flow rates (MFR) depending on, for example, the shapes and physical properties thereof, and it has been difficult to granulate these waste plastics into pellets having a predetermined MFR. For overcoming such a problem, a peroxide is added to reduce the molecular weight of polymer resins such as polyolefin in PTL 1. Specifically, the granulator described in PTL 1 includes two extruders: a first extruder into which a waste plastic is charged and kneaded, and a second extruder installed after the first extruder and configured to introduce a peroxide into the molten plastic extruded from the first extruder. The granulator is alleged to be capable of granulating pellets having a predetermined MFR by measuring the MFR of the molten plastic extruded from the first extruder in-line, and adjusting the amount of the peroxide to be charged into the second extruder based on the measured MFR of the molten plastic.

Citation List

Patent Literature

PTL 1
Japanese Patent Application Laid-Open No. 2019-65092

Summary of Invention

Technical Problem

The granulator described in PTL 1 is expected to produce pellets having a predetermined MFR and viscosity from waste plastics. However, the peroxide charged into the second extruder of the granulator described in PLT 1 may also remain in the granulated pellets. The remaining peroxide becomes impurities in the pelletized resin and may change the physical properties of the resin.

In view of the above problems, an object of the present invention is to provide a kneading apparatus capable of obtaining a recycled resin having a predetermined viscosity from a recovered resin while preventing the addition of impurities.

Solution to Problem

A kneading apparatus related to one aspect of the present invention for solving the above problems includes a second kneader for introducing a second resin into a first resin kneaded by a first kneader and performing kneading of the first resin and the second resin. The second kneader changes an introduced amount of the second resin according to viscosity of the first resin kneaded by the first kneader.

A kneading apparatus related to another aspect of the present invention for solving the above problems includes a second kneader for introducing a second resin and a third resin to a first resin kneaded by a first kneader and performing kneading of the first resin, the second resin, and the third resin. The second kneader changes a ratio between an introduced amount of the second resin and an introduced amount of the third resin according to viscosity of a kneaded product obtained from the second kneader.

Advantageous Effects of Invention

The present invention can provide a kneading apparatus capable of obtaining a recycled resin having a predetermined viscosity from a recovered resin while preventing the addition of impurities.

Brief Description of Drawings

FIG. 1 is a schematic diagram illustrating the configuration of a kneading apparatus related to Embodiment 1 of the present invention;
FIG. 2 is a schematic diagram illustrating the configuration of a kneading apparatus related to Embodiment 2 of the present invention; and
FIG. 3 is a schematic diagram illustrating the configuration of a kneading apparatus related to Embodiment 3 of the present invention.

Description of Embodiment

Hereinafter, the kneading apparatus of the present invention will be described with reference to a plurality of embodiments.

Embodiment 1

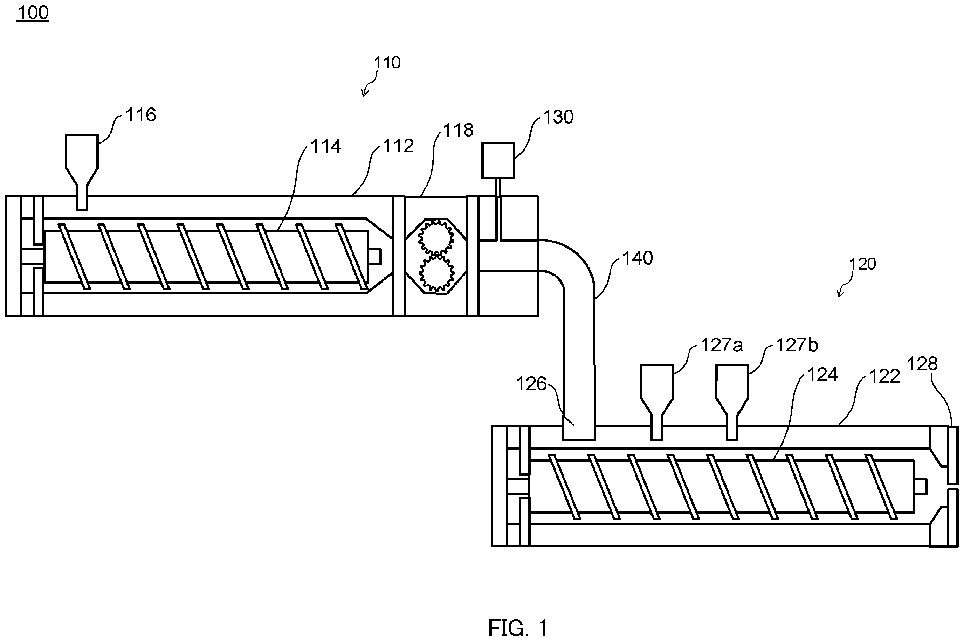

FIG. 1 is a schematic diagram illustrating the configuration of kneading apparatus 100 related to Embodiment 1 of the present invention. Kneading apparatus 100 is configured to melt and knead a recovered resin to generate a recycled resin having a predetermined viscosity.

The recovered resin is typically a resin component recovered from waste products, a resin component that is unavoidably produced in a manufacturing process and does not become a final product, or the like. Such recovered resins contain a wide variety of resin types in different ratios, materials other than resins, such as metals, and additives such as pigments and release agents. After being crushed, a recovered resin is subjected to magnetic separation or the like for the removal of metal components such as iron, and then to specific gravity separation for the separation of each resin type. However, even with the processing, it is almost impossible to completely separate each component.

For example, recovered resins recovered from discarded automobiles contain mixtures of polyethylene, polypropylene, polyamide, polyurethane, and the like in the resin components after the removal of metal components. A mixture of polyethylene and polypropylene can be separated from the polyamide by performing gravity separation on these resin components. However, separation of polyethylene from polypropylene by specific gravity separation is not realistic from the viewpoint of time and cost. In addition, the ratio of polyethylene to polypropylene varies depending on the type and parts of automobiles.

Therefore, when a recovered resin recovered from a discarded automobile is melt-kneaded without any processing, the ratio of polyethylene to polypropylene in the resulting recycled resin would vary. The viscosity and fluidity of the resulting recycled resin to be obtained would also vary depending on the above ratio. Due to the unpredictability of viscosity and fluidity, it is very difficult to reuse the resulting recycled resin as it is.

Kneading apparatus 100 melts and kneads such a recovered resin, further mixes another resin with the recovered resin and performing melting and kneading, thereby generating a recycled resin having a predetermined viscosity.

Kneading apparatus 100 is a tandem extruder including first kneader 110 and second kneader 120 connected to first kneader 110 on the downstream side of the first kneader. Viscometer 130 for in-line measurement of the viscosity of a recovered resin kneaded by first kneader 110 is disposed at a position after first kneader 110 and before second kneader 120.

First kneader 110 is a kneader (extruder) for melt-kneading a recovered resin.

First kneader 110 includes the following: cylinder 112 having a shape of a long cylinder; screw 114 disposed in the bore of cylinder 112 so as to be rotatably driven; hopper 116 for charging a recovered resin into cylinder 112; and extrusion part 118 for extruding the kneaded recovered resin.

Cylinder 112 is a container for kneading the recovered resin charged therein with the use of screw 114. Cylinder 112 may have a heating part for adjusting the internal temperature to melt the recovered resin.

One or more screws 114 are disposed inside cylinder 112 and are rotated by a motor (not illustrated) to knead the recovered resin inside cylinder 112. A twin-screw extruder composed of two screws can adjust kneading characteristics by combining screw segments having various types of kneading characteristics such as forward flight, kneading, and reverse flight. Therefore, an appropriate twin-screw extruder can be selected depending on the type of resin and its physical properties. Furthermore, an extruder composed of a plurality of screw shafts can also be appropriately selected depending on the kneading performance.

Hopper 116 is an inlet for charging a recovered resin into cylinder 112. In the present embodiment, the recovered resin charged into cylinder 112 by hopper 116 is a resin which is recovered from a discarded automobile and subjected to magnetic separation and gravity separation after crushing, and which contains polyethylene and polypropylene.

Extrusion part 118 communicates with one end of resin channel 140 and extrudes the recovered resin, which has been charged into cylinder 112 and melted and kneaded by the rotation of screw 114, to resin channel 140 communicating with second kneader 120. Extrusion part 118 may be a known gear pump or the like.

Second kneader 120 is a kneader (extruder) configured as follows: adds another resin (hereinafter simply referred to as "additive resin") to the recovered resin kneaded by first kneader 110 and further melts and kneads the resins, thereby adjusting the viscosity of a resulting recycled resin to fall within a predetermined range.

Specifically, second kneader 120 includes the following: cylinder 122 having a shape of a long cylinder; screw 124 disposed in the bore of cylinder 122 so as to be rotatably driven; introduction port 126 for charging the recovered resin melted and kneaded by first kneader 110 into cylinder 122; hopper 127a for charging an additive resin into cylinder 122; hopper 127b for charging at least one additive such as rubber or talc into cylinder 122; and extrusion part 128 for extruding the kneaded recovered resin.

Cylinder 122 is a container for kneading the resin component charged therein with the use of screw 124. Cylinder 122 may have a heating part for adjusting the internal temperature to melt the resin component.

One or more screws 124 are disposed inside cylinder 122 and are rotated by a motor (not illustrated) to knead the resin component inside cylinder 122. A twin-screw extruder composed of two screws can adjust kneading characteristics by combining screw segments having various types of kneading characteristics such as forward flight, kneading, and reverse flight. Therefore, an appropriate twin-screw extruder can be selected depending on the type of resin and its physical properties. Furthermore, an extruder composed of a plurality of screw shafts can also be appropriately selected depending on the kneading performance.

Introduction port 126 communicates with the other end of resin channel 140, and charges the recovered resin, which has been melted and kneaded in first kneader 110 and extruded from extrusion part 118, into cylinder 122 of second kneader 120 from resin channel 140.

Hopper 127a is an inlet for charging an additive resin into cylinder 122. The additive resin is a resin whose viscosity is known, and is a resin for adjusting the viscosity of the recovered resin to fall within a predetermined range by being added to and mixed with the recovered resin. The additive resin may be the same type of resin as the recovered resin (polyethylene or polypropylene in the present embodiment), or may be a different type of resin from the recovered resin.

Hopper 127a changes the amount of the additive resin to be charged (i.e., charged or introduced amount of the additive resin) according to the viscosity of the recovered resin measured by viscometer 130. The control for changing the amount of the additive resin to be charged from hopper 127a will be described below.

Hopper 127b is an inlet for charging into cylinder 122 at least one of the following: additives such as a stabilizer, an antioxidant, and a crystal nucleating agent, and a filler such as rubber, talc, and calcium carbonate. Reinforcing fiber materials such as glass fibers, carbon fibers, and/or organic fibers can also be added. Addition of these fillers and/or reinforcing fibers greatly affects viscosity; however, the addition of these additives does not make the viscosity of the resulting recycled resin unpredictable because the viscosity of the resin at the time of the addition is uniformly controlled, and thus even when a certain amount of filler or reinforcing fiber is added, the change in viscosity due to such addition falls within the range that can be predicted by theoretical or empirical formulas.

Extrusion part 128 includes a die and the like, and extrudes a recycled resin having melted and kneaded by first kneader 110 and second kneader 120 and having a predetermined viscosity.

Viscometer 130 is an in-line viscometer and measures the viscosity of a recovered resin melted and kneaded in the first kneader. Viscometer 130 may be a known viscometer that measures the viscosity of a portion of the recovered resin melted and kneaded in first kneader 110 and transferred to the second kneader. For example, R. Gendron, L. E. Daigneault, J. Cell. Plast., 35, 221 (1999), and M. Lee, C. B. Park, C. Tzoganakis, Polym. Eng., Sci., 39, 99 (1999) describe a device for measuring viscosity in-line.

Resin channel 140 is a channel that allows first kneader 110 and second kneader 120 to communicate with each other. Resin channel 140 has a diameter and a structure that allow a recovered resin melted and kneaded in first kneader 110 to flow therethrough. Resin channel 140 may include a valve (not illustrated) for controlling the movement of the melt-kneaded recovered resin from first kneader 110 to second kneader 120. In addition, resin channel 140 may include a heating part (not illustrated) for heating the recovered resin moving inside the channel to maintain the fluidity of the resin.

In the present embodiment, hopper 127a changes the amount of the additive resin to be charged according to the viscosity (measured by viscometer 130) of the recovered resin melted and kneaded in first kneader 110 (herein, "viscosity" means melt viscosity).

Specifically, in the present embodiment, hopper 127a charges the additive resin into cylinder 122 in an amount corresponding to the volume fraction cpj of the additive resin, which should be added in order to obtain the recycled resin having viscosity of $\eta_{Blend}$, with respect to the total amount of the volume of the recovered resin to be introduced into second kneader 120 and the volume of the additive resin to be charged into second kneader 120 (hereinafter, also simply referred to as "the total volume of the resin components charged into a second kneader"). The volume fraction cpj is calculated from the volume fraction $\varphi i$ and viscosity $\eta i$ of the recovered resin and the viscosity $\eta j$ of the additive resin with respect to the total volume of the resin components charged into the second kneader, and calculated based on the theory related to polymer blends, such as the Double-Reptation theory (C. Tsenoglou, Macromolecules, 24, 1762-1767 (1991)).

According to the Double-Reptation theory, in a two-component system such as in the present embodiment, the viscosity $\eta_{Blend}$ of the mixture of the first resin and the second resin can be represented by the following Expression 1.
Expression 1

$$ \eta_{Blend} \approx 2 \left( \Phi_1{}^2 \frac{\eta_1{}^2}{2\eta_1} + 2\Phi_1\Phi_2 \frac{\eta_1\eta_2}{\eta_1 + \eta_2} + \Phi_2{}^2 \frac{\eta_2{}^2}{2\eta_2} \right) \qquad \ldots \text{Expression 1} $$

In Expression 1, $\varphi_1$ represents the volume fraction of the first resin (recovered resin in the present embodiment) with respect to the total volume of the resin components charged into the second kneader; $\eta_1$ represents the viscosity of the first resin; $\varphi_2$ represents the volume fraction of the second resin (additive resin in the present embodiment) with respect to the total volume of the resin components charged into the second kneader; $\eta_2$ represents the viscosity of the second resin; and $\eta_{Blend}$ represents the viscosity of the resulting mixture.

Here, the viscosity $\eta_1$ of the first resin is the viscosity (measured by viscometer 130) of a recovered resin kneaded in the first kneader. The viscosity $\eta_2$ of the second resin (viscosity of the additive resin) is known. In Expression 1, the unknown values are $\varphi_1$ and $\varphi_2$. However, regarding $\varphi_1$ and $\varphi_2$, $\varphi_1 + \varphi_2 = 1$ is satisfied in the present embodiment; thus, $\varphi_2$ can be read as $1 - \varphi_1$. That is, the unknown value in Expression 1 is $\varphi_2$ only.

Therefore, by substituting these values and the value of the viscosity $\eta_{Blend}$ of the recycled resin to be obtained into Expression 1, the volume fraction $\varphi_2$ of the additive resin, which should be charged into second kneader 120, can be calculated. The actual volume Vi of the first resin can be determined from the rotation speed of the gear pump of extrusion part 218 attached to first kneader 110. Therefore, the volume $V_2$ of the second resin (additive resin), which should be charged from hopper 127a into second kneader 120, can be calculated by the expression Vi $\times$ ($\varphi_2/\varphi_1$). The viscosity of a resin depends on the shear rate; thus, viscosity that corresponds to the shear rate conditions for in-line viscosity measurement is selected. As another method, a model that expresses the shear rate dependence of resin viscosity (for example, Cross model, Bird-Carreau model, or Carreau-Yasuda model) is introduced into Expression 1 and expanded to improve the accuracy of viscosity control.

For example, here is assumed that the viscosity $\eta_2$ of the second resin (additive resin) is $5.5 \times 10^4$ Pa·s, and the viscosity $\eta_1$ of the first resin (recovered resin kneaded in the first kneader) measured by viscometer 130 is a numerical value as shown in Table 1. For obtaining a recycled resin having the viscosity $\eta_{Blend}$ of $3.0 \times 10^4$ Pa s, hopper 127a may determine the amount of additive resin to be charged into cylinder 122 in such a way that the ratio of the volume fraction $\varphi_1$ of the first resin (recovered resin) to the volume fraction $\varphi_2$ of the second resin (additive resin) is as follows.

Table 1

| First resin (Recovered resin) | | Second resin (Additive resin) | | Resulting recycled resin | |
|---|---|---|---|---|---|
| Volume fraction $\varphi_1$ (Calculated value) | Viscosity (Pa·s) $\eta_1$ (Measured value) | Volume fraction $\varphi_2$ (Calculated value) | Viscosity (Pa·s) $\eta_2$ (Known) | Volume fraction | Viscosity (Pa·s) $\eta_{blend}$ (Set value) |
| 0.272 | 1000 | 0.728 | 55000 | 1 | 30000 |
| 0.283 | 2000 | 0.717 | 55000 | 1 | 30000 |
| 0.294 | 3000 | 0.706 | 55000 | 1 | 30000 |
| 0.306 | 4000 | 0.694 | 55000 | 1 | 30000 |
| 0.319 | 5000 | 0.681 | 55000 | 1 | 30000 |

According to Embodiment 1 described above, the viscosity of the resulting recycled resin can be adjusted to fall within a predetermined range simply by changing the amount of an additive resin to be charged to the second kneader. Therefore, the addition of impurities becomes unnecessary; thus, unexpected changes in physical properties of the resulting recycled resin are less likely to occur. The method of adjusting the MFR of a recycled resin by adjusting the amount of an additive to be charged, which is not a resin, as described in PTL 1 cannot be used in some cases depending on the type of recovered resin. For example, the molecular weight of polypropylene decreases and the MFR increases due to molecular chain scission by peroxide. On the other hand, polyethylene is subjected to crosslinking by peroxide, increasing the molecular weight and decreasing the MFR. The present invention can adjust the viscosity of a recycled resin to a uniform value even for a mixture of waste plastics that may contain polypropylene and polyethylene.

Embodiment 2

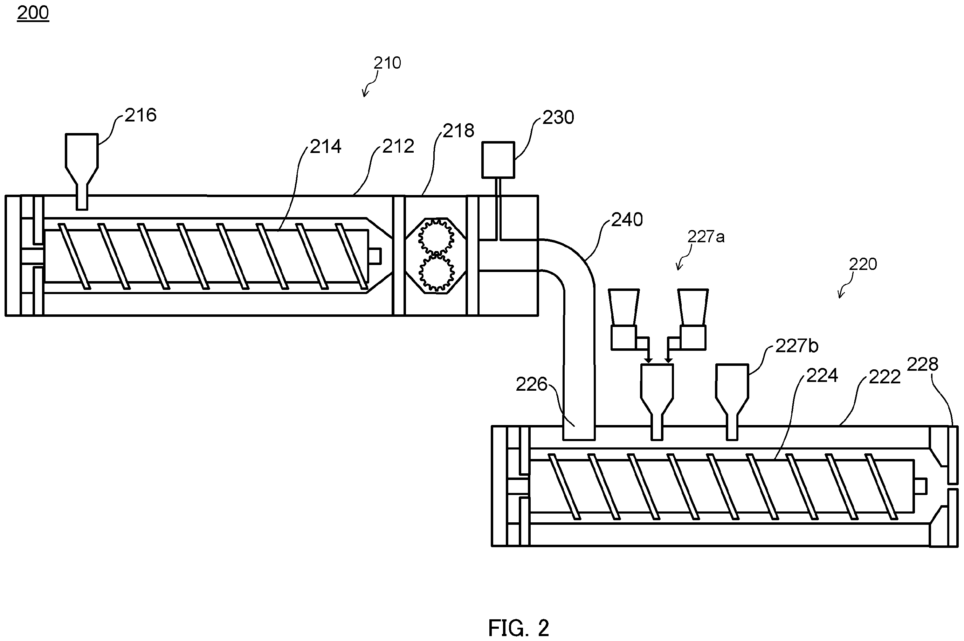

FIG. 2 is a schematic diagram illustrating the configuration of kneading apparatus 200 related to Embodiment 2 of the present invention. Kneading apparatus 200 is also a kneading apparatus for melting and kneading a recovered resin to generate a recycled resin having a predetermined viscosity.

Kneading apparatus 200 is a tandem extruder including first kneader 210 and second kneader 220 connected to first kneader 210 on the downstream side of the first kneader similar to kneading apparatus 100 related to Embodiment 1. Viscometer 230 for in-line measurement of the viscosity of a recovered resin kneaded by first kneader 210 is installed at the connection part between first kneader 210 and second kneader 220.

First kneader 210 includes the following: cylinder 212 having a shape of a long cylinder; screw 214 disposed in the bore of cylinder 212 so as to be rotatably driven; hopper 216 for charging a recovered resin into cylinder 212; and extrusion part 218 for extruding the kneaded recovered resin. The configurations and functions of the components are the same as those of cylinder 112, screw 114, hopper 116, and extrusion part 118 of first kneader 110 in Embodiment 1, and thus redundant description will be omitted. In the present embodiment as in Embodiment 1, the recovered resin charged into cylinder 212 by hopper 216 is a resin which is recovered from a discarded automobile and subjected to magnetic separation and gravity separation after crushing, and which contains polyethylene and polypropylene.

Second kneader 220 includes the following: cylinder 222 having a shape of a long cylinder; screw 224 disposed in the bore of cylinder 222 so as to be rotatably driven; introduction port 226 for charging the recovered resin melted and kneaded by first kneader 210 into cylinder 222; hopper 227a for charging an additive resin into cylinder 222; hopper 227b for charging at least one additive such as rubber or talc into cylinder 222; and extrusion part 228 for extruding the kneaded recovered resin. The configurations and functions of cylinder 222, screw 224, hopper 227b, and extrusion part 228 are the same as those of cylinder 122, screw 124, hopper 127b, and extrusion part 128 of second kneader 120 in Embodiment 1, and thus redundant description will be omitted.

Viscometer 230 is an in-line viscometer and measures the viscosity of a recovered resin melted and kneaded in the first kneader. Resin channel 240 is a channel that allows first kneader 210 and second kneader 220 to communicate with each other. Resin channel 240 has a diameter and a structure that allow a recovered resin melted and kneaded in first kneader 210 to flow therethrough. The configurations and functions of viscometer 230 and resin channel 240 are the same as those of viscometer 130 and resin channel 140 in Embodiment 1, and thus redundant description will be omitted.

Kneading apparatus 200 related to the present embodiment differs from kneading apparatus 100 related to Embodiment 1 in that hopper 227a of second kneader 220 charges two types of additive resins having different viscosities into cylinder 222. Hopper 227a can independently change the amounts of the two types of additive resins to be charged. Of the two types of resins, one resin (hereinafter simply referred to as "first additive resin") is a resin having viscosity higher than that of the recycled resin to be obtained, and the other resin (hereinafter simply referred to as "second additive resin") is a resin having viscosity lower than that of the recycled resin to be obtained.

In kneading apparatus 200 related to the present embodiment, hopper 227a changes the charged amounts of the first additive resin and the second additive resin according to the viscosity (measured by the viscometer 230) of the recovered resin melted and kneaded in first kneader 210.

According to the Double-Reptation theory, in a three-component system such as in the present embodiment, the viscosity $\eta_{Blend}$ of the mixture of the first resin, the second resin, and the third resin can be represented by the following Expression 2.

Expression 2

$$\eta_{Blend} \approx 2\left(\Phi_1{}^2 \frac{\eta_1{}^2}{2\eta_1} + \Phi_2{}^2 \frac{\eta_2{}^2}{2\eta_2} + \Phi_3{}^2 \frac{\eta_3{}^2}{2\eta_3} + 2\Phi_1\Phi_2 \frac{\eta_1\eta_2}{\eta_1 + \eta_2}\right.$$

$$\left. + 2\Phi_2\Phi_3 \frac{\eta_2\eta_3}{\eta_2 + \eta_3} + 2\Phi_1\Phi_3 \frac{\eta_1\eta_3}{\eta_1 + \eta_3}\right) \qquad \dots \text{Expression 2}$$

In Expression 2, $\varphi_1$ represents the volume fraction of the first resin (recovered resin in the present embodiment) with respect to the total amount of the volume of the recovered resin to be introduced into second kneader 220, the volume of the first additive resin to be charged into second kneader 220, and the volume of the second additive resin to be charged into second kneader 220 (the total volume of the resin components charged into the second kneader); $\eta_1$ represents the viscosity of the first resin, $\varphi_2$ represents the volume fraction of the second resin (first additive resin in the present embodiment) with respect to the total volume of the resin components charged into the second kneader; $\eta_2$ represents the viscosity of the second resin; $\varphi_3$ represents the volume fraction of the third resin (second additive resin in the present embodiment) with respect to the total volume of the resin components charged into the second kneader; $\eta_3$ represents the viscosity of the third resin; and $\eta_{Blend}$ represents the viscosity of the resulting mixture.

In the present embodiment as in the previous embodiment, the viscosity $\eta_1$ of the first resin is the viscosity (measured by viscometer 230) of the recovered resin kneaded in the first kneader. In addition, the viscosity $\eta_2$ of the second resin (first additive resin) and the viscosity $\eta_3$ of the third resin (second additive resin) are known.

In the present embodiment, the volume fraction $\varphi_1$ of the first resin can be determined from the amount of the recovered resin charged into first kneader 210 from hopper 216 and the amount of the recycled resin to be obtained.

In Expression 2, the unknown values are $\varphi_2$ and $\varphi_3$. However, regarding $\varphi_1$, $\varphi_2$, and $\varphi_3$, $\varphi_1 + \varphi_2 + \varphi_3 = 1$ is satisfied in the present embodiment; thus, $\varphi_3$ can be read as $1 - \varphi_1 - \varphi_2$. That is, the unknown value in Expression 2 is $\varphi_2$ only.

Therefore, by substituting these values and the value of the viscosity $\eta_{Blend}$ of the recycled resin to be obtained into Expression 2, the volume fraction $\varphi_2$ of the first additive resin (second resin), which should be charged into second kneader 220, can be calculated. From the calculated value of $\varphi_2$, the volume fraction $\varphi_3$ of the second additive resin (third resin), which should be charged into second kneader 220, can be calculated.

Furthermore, in the present embodiment, by specifying the content of the recovered resin in the recycled resin to be obtained, the volume of the resulting recycled resin can be adjusted to fall within a predetermined range.

As described above, in the present embodiment, a recovered resin containing polyethylene and polypropylene is melted and kneaded. Compared to a material including mixture of resins of the same type, such a material including mixture of resins of different types is more likely to cause a decrease in strength due to phase separation between the different resins. Therefore, the proportion of the recovered resin in the recycled resin obtained by melt-kneading is preferably about 30% at most. A compatibilizer for, for example, a copolymer of polyethylene and polypropylene may be charged into the first kneader together with the recovered resin to make phase separation less likely to occur. Furthermore, at this time, using the same type of resin (for example, both are polyethylene or both are polypropylene) as the two types of additive resins (second resin and third resin) also less likely to cause a decrease in strength due to phase separation between different resins.

During the procedure, when the volume fraction of the recovered resin (first resin) is a predetermined value (for example, 30%), the total of the volume fractions of the first additive resin (second resin) and the second additive resin (third resin) to be added at the second kneader is also determined (for example, 70%). Then, when the amount (volume) of the recovered resin to be introduced into second kneader 220 is set constant, the total of the amounts (volumes) of the first additive resin and the second additive resin to be charged into second kneader 220 also becomes constant (volume of recovered resin $\times$ (70/30)). In this manner, the total of the amounts (volumes) of the recovered resin introduced into second kneader 220, the first additive resin charged into second kneader 220, and the second additive resin charged into second kneader 220 can be adjusted to fall within a predetermined range, and the amount (volume) of the recycled resin obtained from these components can also be adjusted to fall within a predetermined range in the present embodiment.

The amounts (volumes) of the first additive resin (second resin) and the second additive resin (third resin), which should be added at the second kneader, can be calculated as follows: the total amount of the additive resins to be added at the second kneader is individually multiplied by the volume fraction of the added amount of the first additive resin and the volume fraction of the added amount of the second additive resin-the both resins for obtaining a recycled resin having a predetermined viscosity as determined in the present embodiment.

According to the present embodiment, the viscosity of the recycled resin can be thus adjusted to fall within a predetermined range while the amount (volume) of the resulting recycled resin is adjusted to fall within a predetermined range, by setting the proportion of the recovered resin contained in the resulting recycled resin and the viscosity of the recycled resin.

Specifically, the following case is assumed: the viscosity $\eta_2$ of the second resin (first additive resin) is $2.0 \times 10^5$ Pa s, the viscosity $\eta_3$ of the third resin (second additive resin) is $6.0 \times 10^3$ Pa·s, and the viscosity $\eta_1$ (measured by viscometer 230) of the recovered resin kneaded in the first kneader is a numerical value as shown in Table 1. In such a case, for obtaining a recycled resin with a recovered resin content (equivalent to $\varphi_1$) of 30% and viscosity $\eta_{Blend}$ of $3.0 \times 10^4$ Pa s, hopper 227a may change the amounts of the second resin (first additive resin) and the third resin (second additive resin) to be charged into cylinder 222 in such a way that the volume fraction $\varphi_2$ of the second resin (first additive resin) and the volume fraction $\varphi_3$ of the third resin (second additive resin) have a ratio as follows.

Table 2

| First resin (Recovered resin) | | Second resin (First additive resin) | | Third resin (Second additive resin) | | Resulting recycled resin | |
|---|---|---|---|---|---|---|---|
| Volume fraction $\varphi_1$ (Set value) | Viscosity (Pa·s) $\eta_1$ (Measured value) | Volume fraction $\varphi_2$ (Calculated value) | Viscosity (Pa·s) $\eta_2$ (Known) | Volume fraction $\varphi_3$ (Calculated value) | Viscosity (Pa·s) $\eta_3$ (Known) | Volume fraction | Viscosity (Pa·s) $\eta_{blend}$ (Set value) |
| 0.300 | 10000 | 0.317 | 200000 | 0.383 | 6000 | 1 | 30000 |
| 0.300 | 20000 | 0.282 | 200000 | 0.418 | 6000 | 1 | 30000 |
| 0.300 | 30000 | 0.253 | 200000 | 0.447 | 6000 | 1 | 30000 |
| 0.300 | 40000 | 0.229 | 200000 | 0.471 | 6000 | 1 | 30000 |
| 0.300 | 50000 | 0.207 | 200000 | 0.493 | 6000 | 1 | 30000 |

According to the present embodiment as obvious from Table 2, for obtaining a recycled resin with a recovered resin content within a predetermined range, a recycled resin having a predetermined viscosity can be obtained simply by adjusting the ratio of the volume of the first additive resin to the volume of the second additive resin (both resins are charged into cylinder 122 by hopper 227a).

According to Embodiment 2 described above, the viscosity of the resulting recycled resin can be adjusted to fall within a predetermined range simply by changing the ratio between the volumes of the first additive resin and the second additive resin to be charged into the second kneader. Therefore, the addition of impurities becomes unnecessary; thus, unexpected changes in physical properties of the resulting recycled resin are less likely to occur. In addition, when the amount of the recovered resin to be charged into the first kneader and the content of the recovered resin in the resulting recycled resin are set, both the viscosity and the volume of the resulting recycled resin can be adjusted to fall within predetermined ranges simply by changing the ratio between the volumes of the first additive resin and the second additive resin to be charged into the second kneader.

Embodiment 3

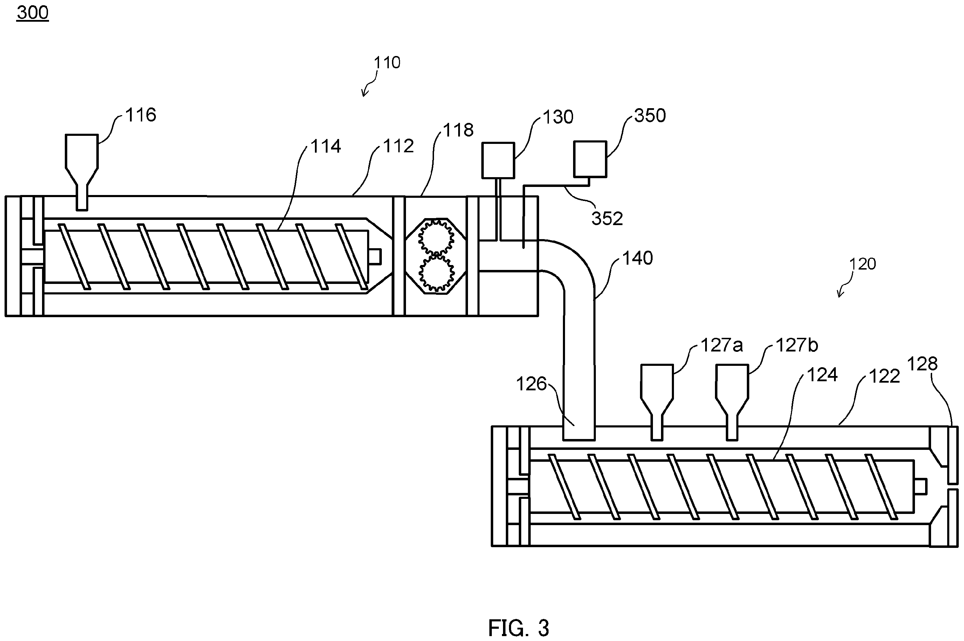

FIG. 3 is a schematic diagram illustrating the configuration of kneading apparatus 300 related to Embodiment 3 of the present invention.

Kneading apparatus 300 according to the present embodiment differs from kneading apparatus 100 related to Embodiment 1 in that kneading apparatus 300 includes spectroscopic device 350 for measuring the infrared spectrum of a recovered resin melted and kneaded in first kneader 110. The other configurations are the same as those of Embodiment 1, and thus redundant description will be omitted.

Spectroscopic device 350 may be a dispersive device or a Fourier transform (FT-IR) type device, preferably an FT-IR type device. Spectroscopic device 350 is preferably capable of high-speed measurement so that in-line measurement can be performed, such as "ParticleTrack with FBRM technology" manufactured by Yamato Scientific Co., Ltd. Spectroscopic device 350 may be, for example, attached to the downstream side of extrusion part 118 (for example, in the vicinity of viscometer 130 or at resin channel 140) via optical fiber 352, and measure the infrared spectrum of the recovered resin at the attached site.

Hindered phenol antioxidants are generally used as heat resistant stabilizers for polyethylene and polypropylene resins. For example, Irganox 1010, which is a hindered phenolic antioxidant, shows C-O stretching at 1300-1000 cm$^{-1}$ and C=O stretching at 1750-1735 cm$^{-1}$ in the IR spectrum. When such an antioxidant added during the production of a recovered resin is consumed due to thermal deterioration during use, these characteristic peaks in the IR spectrum measured in-line become smaller or disappear. Therefore, the amount of the heat resistant stabilizer in the resulting recycled resin can be adjusted to a constant value by changing the amount of the heat stabilizer charged from hopper 127b of the second kneader according to the height of the peak of the IR spectrum derived from the heat stabilizer measured by spectroscopic device 350. The amount of the heat resistant stabilizer to be charged can be determined based on the calibration curve prepared in advance between the peak height of the IR spectrum and the added amount. Alternatively, the amount of heat stabilizer to be charged may be changed based on an empirical formula.

In addition, the additive whose added amount is changed is not limited to a heat stabilizer, and any additive may be used.

The above description shows an example in which kneading apparatus 100 related to Embodiment 1 includes spectroscopic device 350; however, kneading apparatus 200 related to Embodiment 2 may include spectroscopic device 350.

Other embodiments

It should be noted that each of the above-described embodiments is an example of the present invention, and the present invention is not limited to the above-described embodiments. It goes without saying that various other embodiments are possible within the scope of the idea of the present invention.

For example, in each embodiment described above, the viscosity of a melt-kneaded recovered resin is measured by a viscometer installed after the first kneader. However, the viscometer may be disposed inside the first kneader, or may be disposed at the resin channel connecting the first kneader with the second kneader. The viscometer may have a configuration such that the pressure and flow rate of a recovered resin extruded from the extrusion part of the first kneader is measured, and the viscosity of the recovered resin is calculated from these values.

In each embodiment described above, an additive resin that is polyethylene or polypropylene is added to the recovered resin containing polyethylene and polypropylene. The resin type is not limited thereto, and, for example, off-grade materials and recovered materials (having been separated and sorted) each including only polyethylene, polypropylene, or polyester may be used. In the present invention, the recovered resin and additive resin may be any one of combinations of various resins, including polyamide, polystyrene, acrylonitrile-butadiene-styrene copolymer (ABS), polyvinyl chloride (PVC), polycarbonate, polyurethane, and polyester.

In Embodiment 2 described above, two types of additive resins are added at the second kneader to a recovered resin melted and kneaded in the first kneader; however, three or more types of additive resins may be added at the second kneader. In addition, at least one of the following may be added at the second kneader: additives such as stabilizers, antioxidants, and crystal nucleating agents; fillers such as rubber, talc, and calcium carbonate; and reinforcing fiber materials such as glass fibers, carbon fibers, and organic fibers.

In each embodiment described above, a recovered resin was added at the first kneader, but not only the recovered resin but also a virgin material may be added to the first kneader. Alternatively, a natural resin of unknown viscosity may be added at the first kneader. In addition, liquid ethylene-propylene rubber, ethylene-propylene rubber having a pellet shape, ethylene-butene rubber, propylene-butene rubber, or propylene-butene-ethylene rubber may be added at the first kneader as a compatibilizer for, for example, a copolymer of polyethylene and polypropylene.

In each embodiment described above, the extrusion part of the second kneader may extrude the recycled resin into any known shape, such as of sheet, film, rod, plate, pipe, irregular cross-section molded article, and strand. In addition, a cutter or the like may be disposed after the extrusion part to process the extruded recycled resin into pellets. Alternatively, a known molding machine may be disposed after the extrusion part to mold the extruded recycled resin into a predetermined shape.

In Embodiment 3 described above, the amount or proportion of additive resin to be charged from hopper 127a or hopper 227a is changed, and also the amount of an additive to be charged from hopper 127b or hopper 227b is changed. However, only the amount of the additive may be changed according to the infrared spectrum measured by the spectroscopic device, without changing the amount or proportion of the additive resin.

In each embodiment described above, a control unit (not illustrated) may control each operation described above in the kneading apparatus. That is, the control unit controls the operation of the hopper of the first kneader to charge a recovered resin from the hopper into the cylinder of the first molding machine. The control unit controls the operation of the cylinder and screw (or motor) of the first kneader to heat, melt, and knead the recovered resin charged into the cylinder. The control unit controls the operation of the extrusion part of the first kneader to extrude the melt-kneaded recovered resin from the first kneader, thereby introducing the melt-kneaded recovered resin into the cylinder of the second kneader from the introduction port of the second kneader. The control unit controls the operation of the hopper of the second kneader to add at least one type of additive resin and optionally at least one additive into the cylinder of the second kneader. The control unit controls the operation of the cylinder and screw (or motor) of the second kneader to heat, melt, and knead the recovered resin and the additive resin (and the additive) charged into the cylinder. The control unit controls the operation of the extrusion part of the second kneader to extrude the melt-kneaded resin components from the second kneader. At this time, the control unit changes the charged amount of the additive resin to be added from the hopper of the second kneader (or the ratio between the charged amount of the second additive resin and the charged amount of the third additive resin) according to the viscosity of the recovered resin melted and kneaded in the first kneader.

Industrial Applicability

The kneading apparatus of the present invention is capable of obtaining a recycled resin having a predetermined viscosity from a recovered resin. It is not necessary to add a substance that lowers the molecular weight of a resin as in PTL 1; thus, unnecessary impurities are less likely to remain in the resulting recycled resin. The kneading apparatus of the present invention is capable of adjusting the viscosity of a recycled resin obtained from a consumer material or an off-grade material to a uniform value, thereby generating a recycled resin that can be easily used for various applications. The present invention is thus expected to expand the range of reuse of these resins and contribute to the improvement of resin recycling efficiency.

Reference Signs List

    100, 200, 300 Kneading apparatus
    110, 210 First kneader
    112, 212 Cylinder
    114, 214 Screw
    116, 216 Hopper
    118, 218 Extrusion part
    120, 220 Second kneader
    122, 222 Cylinder
    124, 224 Screw
    126, 226 Introduction port
    127a, 227a Hopper
    127b, 227b Hopper
    128, 228 Extrusion part
    130, 230 Viscometer
    140, 240 Resin channel
    350 Spectroscopic device
    352 Optical fiber

**Claims**

1.  A kneading apparatus, comprising:

    a second kneader for introducing a second resin into a first resin kneaded by a first kneader and performing kneading of the first resin and the second resin, wherein
    the second kneader changes an introduced amount of the second resin according to viscosity of the first resin kneaded by the first kneader.

2.  The kneading apparatus according to claim 1, further comprising:

    a viscometer for measuring the viscosity of the first resin kneaded by the first kneader, wherein
    the second kneader changes the introduced amount of the second resin according to the viscosity of the first resin measured by the viscometer.

3.  The kneading apparatus according to claim 1 or 2, wherein
    the second kneader introduces the second resin in an amount corresponding to a volume fraction of the second resin, the volume fraction being with respect to a total volume of a resin component charged into the second kneader, the volume fraction being calculated from the viscosity of the first resin.

4.  The kneading apparatus according to any one of claims 1 to 3, wherein:

the second kneader introduces the second resin and a third resin; and
the second kneader changes the introduced amount of the second resin and an introduced amount of the third resin according to the viscosity of the first resin kneaded by the first kneader.

5. The kneading apparatus according to claim 4, wherein:

the second kneader introduces, as the second resin, a resin having viscosity higher than that of a resin obtained by the kneading performed by the second kneader; and
the second kneader introduces, as the third resin, a resin having viscosity lower than that of the resin obtained by the kneading performed by the second kneader.

6. The kneading apparatus according to any one of claims 1 to 5, further comprising: the first kneader for kneading the first resin, wherein the second kneader is connected to the first kneader on a downstream side of the first kneader.

7. A kneading apparatus, comprising:

a second kneader for introducing a second resin and a third resin to a first resin kneaded by a first kneader and performing kneading of the first resin, the second resin, and the third resin, wherein
the second kneader changes a ratio between an introduced amount of the second resin and an introduced amount of the third resin according to viscosity of a kneaded product obtained from the second kneader.

8. The kneading apparatus according to claim 7, wherein:

the second kneader introduces, as the second resin, a resin having viscosity higher than that of a resin obtained by the kneading performed by the second kneader; and
the second kneader introduces, as the third resin, a resin having viscosity lower than that of the resin obtained by the kneading performed by the second kneader.

9. The kneading apparatus according to claim 7 or 8, further comprising: the first kneader for kneading the first resin, wherein the second kneader is connected to the first kneader on a downstream side of the first kneader.

10. The kneading apparatus according to any one of claims 1 to 9, further comprising:

a spectroscopic device for measuring an infrared spectrum of the first resin kneaded by the first kneader, wherein the second kneader changes an introduced amount of an additive according to the infrared spectrum of the first resin measured by the spectroscopic device.

FIG. 1

EP 4 353 436 A1

FIG. 2

EP 4 353 436 A1

FIG. 3

## INTERNATIONAL SEARCH REPORT

| International application No. |
|---|
| PCT/JP2021/022162 |

A.  CLASSIFICATION OF SUBJECT MATTER
B29B 7/74(2006.01)i
FI: B29B7/74

According to International Patent Classification (IPC) or to both national classification and IPC

B.  FIELDS SEARCHED

Minimum documentation searched (classification system followed by classification symbols)
B01F7/00-7/32, B09B1/00-5/00, B29B7/00-7/94, B29B17/00-17/04, C08J11/00-11/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2010-260938 A (SHARP CORP) 18 November 2010 (2010-11-18) claims, paragraphs [0024], [0025], [0046], [0047], [0058]-[0074] | 1-9<br>10 |
| Y<br>A | WO 2020/006591 A1 (NEXT GENERATION RECYCLINGMASCHINEN GMBH) 09 January 2020 (2020-01-09) page 8, line 31 to page 25, fig. 1 | 1-9<br>10 |
| A | JP 2020-168855 A (FUKUI KANKYO JIGYO KK) 15 October 2020 (2020-10-15) | 1-10 |

☐  Further documents are listed in the continuation of Box C.  ☒  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>14 July 2021 (14.07.2021) | Date of mailing of the international search report<br>27 July 2021 (27.07.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2021/022162

| Patent Documents referred in the Report | Publication Date | Patent Family | Publication Date |
|---|---|---|---|
| JP 2010-260938 A | 18 Nov. 2010 | (Family: none) | |
| WO 2020/006591 A1 | 09 Jan. 2020 | AT 521534 A | |
| JP 2020-168855 A | 15 Oct. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019065092 A

**Non-patent literature cited in the description**

- **R. GENDRON ; L. E. DAIGNEAULT.** *J. Cell. Plast.,* 1999, vol. 35, 221
- **M. LEE ; C. B. PARK ; C. TZOGANAKIS.** *Polym. Eng., Sci.,* 1999, vol. 39, 99
- **C. TSENOGLOU.** *Macromolecules,* 1991, vol. 24, 1762-1767